**Europäisches Patentamt**

**European Patent Office**

**Office européen des brevets**

(19)

(11) Veröffentlichungsnummer: **0 042 168**
A1

(12) **EUROPÄISCHE PATENTANMELDUNG**

(21) Anmeldenummer: **81104612.7**

(22) Anmeldetag: **15.06.81**

(51) Int. Cl.³: **F 16 L 37/20,** F 16 L 23/04, F 16 L 33/12

(30) Priorität: **18.06.80 DE 3022698**
**12.12.80 DE 3046779**

(43) Veröffentlichungstag der Anmeldung: **23.12.81**
**Patentblatt 81/51**

(84) Benannte Vertragsstaaten: **AT CH DE FR GB IT LI NL**

(71) Anmelder: **Linnemann, Friedrich, Uhlandstrasse 24,**
**D-7405 Dettenhausen (DE)**

(72) Erfinder: **Linnemann, Friedrich, Uhlandstrasse 24,**
**D-7405 Dettenhausen (DE)**

(54) **Spannring zur Schnellkupplung zweier Kleinflansche einer Rohrverbindung.**

(57) Spannring (8, 108) zur Schnellkupplung zweier Kleinflansche (4, 5, 104, 105) einer Rohrverbindung, insbesondere einer Vakuumrohrverbindung (1, 101) bestehend aus einem Endteil (14, 42, 53, 114), an dem über einen Achszapfen (25, 122) ein Spannbolzen (23, 125) schwenkbar gelagert ist, und einem Endstück (15, 45, 56, 115), über das im Kupplungszustand ein Spannstück (30, 51, 62, 130) angeordnet ist, das einen Betätigungshebel (31, 133) sowie einen Spannkopf (29, 50, 60, 132) aufweist. Der Spannkopf (29, 50, 60, 132) ist über einen Achsbolzen (28, 131) am Spannbolzen (23, 125) schwenkbar angeordnet und ist in Richtung gegen den Endteil (14, 42, 53, 114) pressbar, wobei der Spannbolzen (23, 125) im wesentlichen parallel zu Stirnflächen (17, 16, 116, 117) des Endteiles (14, 42, 53, 114) des Endstückes (15, 45, 56, 115) verläuft und der Spannkopf (29, 50, 60, 132) mit einer Pressfläche (37, 48, 59, 138) am Endstück (15, 45, 56, 115) an einer Druckfläche (19, 46, 57, 118) anliegt. Ausschliesslich im Vorderbereich des Spannringes (8, 108) verläuft der Betätigungshebel (31, 133) des Spannstückes (30, 51, 62, 130) zur Pressfläche (37, 48, 59, 138) des Spannkopfes (29, 50, 60, 132) sowie zur Druckfläche (19, 46, 57, 118) des Endstückes (15, 45, 56, 115) quer.

- 1 -          0042168

Friedrich Linnemann, D-7405 Dettenhausen, Uhlandstr. 24


Spannring zur Schnellkupplung zweier
Kleinflansche einer Rohrverbindung
==========================================

Die Erfindung bezieht sich auf einen Spannring mit den im Oberbegriff des Anspruchs 1 genannten Merkmalen.

Bei einem bekannten Spannring dieser Art erstreckt sich der Betätigungshebel des Spannstücks im wesentlichen in der gleichen Richtung wie die Preßfläche und im Kupplungszustand auch in der Richtung der Druckfläche des Endstücks. Der Betätigungshebel liegt dabei seitlich außen am Spannring an. Dabei ist es nachteilig, daß der Betätigungshebel beim An- und Abkuppeln seitlich weit ausschwenkt. Es ist somit zur Seite hin ein erheblicher Platzbedarf erforderlich. Bei engen Platzverhältnissen neben der Rohrverbindung ist deshalb eine Schnellkupplung mit einem solchen Spannring nicht möglich. Weiterhin ist es nachteilig, daß für unterschiedliche Spannringgrößen mit verschiedenen Durchmessern jeweils auch unterschiedliche Betätigungshebel vorgesehen werden müssen, die entsprechend den verschiedenen Krümmungen der Spannringe angepaßt sind. Dadurch ist die Herstellung aufwendig und es werden erhebliche Mehrkosten verursacht.

Demgemäß besteht die Aufgabe der Erfindung darin, einen Spannring mit den Merkmalen des Oberbegriffs des Anspruchs 1 so zu verbessern, daß eine Schnellkupplung ausschließlich im vorderen Bereich am Endstück und Endteil über das Spannstück erfolgt und eine leichtere Handhabung sowie Herstellungs- bzw. Kosteneinsparungen erzielt werden.

Diese Aufgabe wird erfindungsgemäß durch die Kennzeichnungsmerkmale des Anspruchs 1 gelöst.

Mit der Erfindung wird der Vorteil erreicht, daß das Spannstück mit dem Betätigungshebel nur im vorderen Bedienungsbereich des Spannrings angeordnet ist. Dadurch ist eine Schnellmontage von Hand auch bei engsten Raumverhältnissen ohne weiteres möglich. Für das Verschwenken des Betätigungshebels wird seitlich neben dem Spannring kein zusätzlicher Schwenkfreiraum benötigt. Bei der Kupplungsdurchführung wird der Spannkopf über das Endstück geschoben und anschließend wird der Betätigungshebel so zurückgeschwenkt, daß er sich direkt vor dem Endteil und dem Endstück befindet und dabei im wesentlichen parallel zum Spannbolzen gerichtet ist. Aufgrund der Erfindung ist das Spannstück beim An- und Abkuppeln des Spannrings ausgesprochen leicht und behinderungsfrei zu handhaben, so daß eine problemlose Bedienung gegeben ist. Ein weiterer Vorteil besteht darin, daß eine äußerst platzsparende Kupplungsausführung im Bereich des Spannstücks möglich ist, wodurch eine kostengünstige und materialsparende Herstellung erzielt wird. Zudem ist es vorteilhaft, daß keine Anpassung des Betätigungshebels an unterschiedliche Spannringdurchmesser erforderlich, so daß mit einer einzigen Spannstückausführung verschiedene Spannringdurchmesser der Kleinflanschverbindungen ausgestattet werden können. Auch dadurch wird eine erhebliche Kosteneinsparung und eine sehr günstige Herstellung erreicht. Außerdem ist dadurch die Möglichkeit gegeben, die Spannstücke untereinander auszutauschen, so daß die Lagerhaltung vereinfacht wird und etwaige Nachlieferungen od. dgl. problemlos und verwechselungsfrei durchzuführen sind. Die Kupplungsverspannung über das erfindungsgemäße Spannstück ist einwandfrei fest arretiert, so daß insgesamt eine einfache und leichtgängige Schnellverschlußbedienung mit hoher Kupplungssicherheit gegeben ist.

Bevorzugte Ausgestaltungen und Weiterbildungen der Erfindung sind durch die Merkmale der Unteransprüche, der Beschreibung und der Zeichnung gegeben, wobei in vorteilhafter Weise

insbesondere zweckmäßige Bedienungs- , Spann- und Sicherungsmöglichkeiten der Schnellkupplung erzielt werden.

Hierzu kann es zweckmäßig sein, die Länge des Betätigungshebels etwas größer als die Breite des Endteils zuzüglich der Breite des Endstücks in Spannrichtung des Spannbolzens auszuführen, wobei der freie Endbereich des Betätigungshebels als Griffansatz ausgeführt sein kann, der eine Außenfläche des Endteils überragt, so daß der Betätigungshebel auch in der Verschlußstellung problemlos mit einer Hand ergriffen werden kann. Die Stärke des Betätigungshebels kann im wesentlichen gleich oder etwas kleiner als die Stärke des Spannbolzens ausgeführt sein und entspricht vorzugsweise dem Durchmesser des Spannbolzens, wodurch eine materialsparende, nicht zu große Stärke des Betätigungshebels mit den erforderlichen Kräftebeanspruchungen in vollem Umfang genügender Festigkeit bzw. Widerstandsfähigkeit erreicht wird. Die Breite des Betätigungshebels kann vorteilhaft etwa gleich der Dicke des Endteils bzw. des Endstücks ausgeführt sein, so daß eine weitgehend gleiche Breitenausführung vorliegt und keine störenden Vorsprünge bestehen. In der Verschlußstellung kann die zur Preßfläche des Spannkopfes quer verlaufende Innenfläche des Betätigungshebels an der Stirnfläche des Endteils bzw. des Endstücks anliegen. Damit ist eine Abstützung und ein satter Abschluß im Stirnflächenbereich gegeben. Bei einer bevorzugten Ausführung kann es insbesondere günstig sein, daß der Spannkopf des Spannstücks eine Sicherung gegen Abschieben vom Endstück aufweist, wodurch ein unbeabsichtigtes Lösen in der Verschlußstellung praktisch vermieden und eine zuverlässige Lagesicherung gegeben ist. Der Winkel zwischen der Innenfläche des Betätigungshebels und der Preßfläche des Spannkopfes kann im wesentlichen 90° oder bevorzugt etwas kleiner als 90° sein. Auch kann es vorteilhaft sein, die Preßfläche des Spannkopfes im wesentlichen plan auszubilden.

Weiterhin kann es von Vorteil sein, insbesondere den erfindungsgemäßen Spannring so auszuführen, daß der Spannkopf an der Druckfläche des Endstücks mit einem dem Betätigungshebel entfernt liegenden Druckpunkt anliegt. Der Abstand des Druckpunkts zur Innenfläche des Betätigungshebels ist dabei größer als der Abstand zwischen der Längsachse des Spannbolzens und der Innenfläche des Betätigungshebels. Der Druckpunkt kann hierbei zweckmäßig etwa im Bereich derjenigen Umfangsseite des Spannbolzens an der Druckfläche des Endstücks angreifen, die von der Innenfläche des Betätigungshebels am weitesten entfernt ist. Mit der Druckpunktausbildung wird eine zuverlässige Verschlußarretierung des Spannstücks erzielt. Auch kann der Spannkopf vorteilhaft eine Auflauffläche bzw. Einführungs- oder Voranzugsfläche aufweisen, die quer zur Preßfläche verläuft. Vorzugsweise kann sich die Auflauffläche des Spannkopfes etwa parallel zum Betätigungshebel in entgegengesetzter Richtung erstrecken, wobei die Auflauffläche auch etwas schräg geneigt sein kann. Zum Verschließen und Lösen des Spannverschlußes kann zweckmäßig zwischen der Preßfläche und der Auflauffläche des Spannkopfes eine Rundung ausgebildet sein, wodurch die Betätigung erleichtert wird. Hierbei kann der Druckpunkt im Übergangsbereich der Preßfläche zur Rundung angeordnet sein und vorteilhaft deren jeweilige einseitige Endbegrenzung darstellen. Zudem kann es für einen leichten Verschluß mit integriertem Voranzug insbesondere beim erfindungsgemäßen Spannring vorteilhaft sein, wenn der Spannkopf an der Auflauffläche einen Rastteil aufweist. Dieser Rastteil kan als Rillenausnehmung ausgeführt sein und sich vorteilhaft an dem der Preßfläche abgewandten Endbereich der Auflauffläche befinden. Der Spannkopf selbst kann an dem der Preßfläche abgewandten Ende als verjüngt auslaufender Teil ausgeführt sein, wodurch eine materialsparende und funktionsgerecht ästhetische Gestaltung gegeben ist.

Zudem kann bei einer bevorzugten Ausführung des Spannrings das Spannstück mit seinem Spannkopf über den Spannbolzen in Richtung zum freien Ende bzw. Griffansatz des Betätigungshebels verstellbar sein. Hierfür kann der Achsbolzen ein Innengewinde aufweisen, in dem ein Gewindeteil des Spannbolzens für eine Feineinstellung bzw. Feinnachstellung drehbar gelagert ist, wobei der Achsbolzen im Durchmesser zweckmäßig größer ist als der Durchmesser des Gewindeteils.

Vorteilhaft ist insbesondere beim Spannring der vorliegenden Erfindung zur Erzielung eines leichtgängigen, teilweise selbst eingleitenden Voranzug und für eine zuverlässige Arretierung zwischen der Preßfläche des Spannkopfes und der Innenfläche des Betätigungshebels ein spitzer Winkel ausgebildet. Die Preßfläche und die Druckfläche des Endstücks verlaufen dabei etwa in gleichem Maße schräg, wobei der Winkel zwischen der Druckfläche und der Stirnfläche ebenfalls spitz ist. Es kann auch günstig sein, das Endstück an der Druckfläche mit einer Sperrnase zu versehen, die in eine Nasenausnehmung an der Preßfläche des Spannkopfes eingreift. Dabei kann die Sperrnase in unmittelbarer Angrenzung an der Stirnfläche des Endstücks vorgesehen sein, während die Nasenausnehmung an die Innenfläche des Betätigungshebels angrenzt. Die Sperrnase und die Nasenausnehmung können hierbei im wesentlichen rechteckförmig ausgeführt sein, doch ist es auch ohne weiteres möglich, diese beispielsweise gerundet auszubilden. Zudem besteht die vorteilhafte Möglichkeit, den Spannkopf an der Preßfläche mit einem Rastnocken zu versehen, der auf Abstand zur Innenfläche des Betätigungshebels angeordnet ist. Der Rastnocken greift in eine entsprechende Rastausnehmung an der Druckfläche des Endstücks ein. Dabei können der Rastnocken und die Rastausnehmung etwa im Bereich der Ebene des Spannbolzens sich befinden. Auch der Rastnocken und die Rastausnehmung können im wesentlichen rechteckförmig gestaltet sein, doch ist es auch hier möglich, diese gerundet auszubilden. Für eine symmetrische Ausbildung und damit vorteilhaft einheitliche Werkzeuggestaltung kann es günstig sein, den Endteil mit einer schräg verlaufenden Außenfläche zu versehen, deren Neigung gleich dem Schrägverlauf der Druckfläche des Endstücks ist. Auch kann der Endteil an seiner Außenfläche eine Nase aufweisen und genauso wie das Endstück mit der Sperrnase gestaltet sein. Weiterhin kann der Endteil an seiner Außenfläche eine Ausnehmung besitzen und mit dieser gleich dem Endstück mit der Rastausnehmung sein.

Darüber hinaus kann es insbesondere beim Spannring der vorliegenden Erfindung zur Erzielung einer Zwangsführung beim Kupplungsvorgang und für eine exakte Geradanlage des Spannkopfes günstig sein, dem Spannstück zur Ausrichtung und Sicherung gegen Verdrehen um die Längsachse des Spannbolzens einen Führungsteil zu-zuordnen. Hierbei erfolgt bereits beim Beginn des Kupplungsvorgangs durch Einschwenken des Spannstücks eine Geradausrichtung über den Führungsteil, so daß der Spannkopf zwangsläufig zur richtigen Flächenanlage gelangt. Die plan gerichtete Kupplungslage des Spannstücks wird somit durch den Führungsteil zwangsbestimmt. Eine Fehlbedienung ist damit ausgeschlossen. Wird das Spannstück beim Kupplungsvorgang zu schräg angesetzt, so tritt eine Selbstsperrung auf, so daß eine Fortführung des Kupplungsvorgangs und eine Schiefverspannung nicht möglich ist. Der Kupplungsvorgang ist nur durchzuführen, wenn das Spannstück im wesentlichen gerade ausgerichtet ist. Es wird damit durch die erfindungsgemäße Zwangszentrierung eine Beschädigung beim Ankuppeln vermieden, wodurch eine hohe und stets zuverlässige Funktionstüchtigkeit über einen langen Zeitraum und für viele Schnellkupplungs-Betätigungsvorgänge gewährleistet ist. Der Führungsteil kann hierbei zweckmäßig am Endstück bzw. Endteil eines Spannringstücks verdrehsichernd geführt sein. Weiterhin kann es vorteilhaft sein, den Führungsteil am Spannbolzen anzuordnen und beim Kupplungsvorgang in eine Aussparung des Endstücks bzw. des Endteils einzuschwenken. Der Führungsteil kann unkompliziert und einfach als Rechteckformteil ausgeführt sein, dessen Stärke etwas schmaler ist als die Breite der Aussparung im Endstück bzw. Endteil. Hierbei ist es günstig, das Spannstück an einem Fortsatz des Führungsteils schwenkbar zu lagern. Weiterhin kann vorteilhaft ein im Achszapfen des Endteils verdrehbar gelagerter Gewindeteil des Spannbolzens in Verlängerung des Führungsteils ausgebildet sein. Zur Erleichterung des Kupplungsvorgangs kann der Führungsteil mindestens eine Einführphase besitzen.

Zur Erzielung einer herstellungsgünstigen, stabilen, widerstandsfähigen und resistenten Ausführung kann es insbesondere beim Spannring der vorliegenden Erfindung zweckmäßig sein, das Spannstück aus Kunststoff herzustellen. Darüber hinaus kann ein besonderer Vorteil darin bestehen, das den Führungsteil zentrierende Endstück und den Endteil sowie das Spannringstück mit dem Spannstück aus Kunststoff herzustellen, wobei es vorteilhaft sein kann, für alle Teile im wesentlichen gleiches Kunststoffmaterial zu verwenden. Als Kunststoff kann vorteilhaft Polyamid eingesetzt werden. Auch kann es besonders vorteilhaft sein, ein Polyformaldehyd (POM) zu verwenden, wobei es auch im Rahmen der Erfindung liegt, für die verschiedenen Teile verschiedene Kunststoffarten einzusetzen. Durch die Kunststoffausführung des Spannstücks ergibt sich ein besonderer Vorteil im Bereich der Auflauffläche, des Druckpunktes und der Preßfläche am Spannkopf, da hier selbst bei höchster Beanspruchung aufgrund der guten zähelastischen Eigenschaften und hohen Rückstellfähigkeit praktisch keine bleibenden Verformungen auftreten, so daß eine hohe Standfestigkeit mit langer Lebensdauer gegeben ist. Zudem werden damit ausgezeichnete Gleiteigenschaften erreicht, wodurch die Handhabung ausgesprochen leichtgängig ist. Die Länge des den Spannkopf des Spannstücks überragenden Führungsteils kann so bemessen werden, daß sie etwa gleich der Breite des Endstücks in Spannrichtung ist.

Weitere Vorteile und Einzelheiten der Erfindung sind der nachfolgenden Beschreibung und der Zeichnung zu entnehmen, die in schematischer Darstellung bevorzugte Ausführungs-

0042168

formen als Beispiel zeigt. Es stellen dar:

FIG. 1 eine Draufsicht auf eine erfindungsgemäße Vakuumrohrverbindung,

FIG. 2 eine Schnittansicht der Vakuumrohrverbindung nach FIG. 1 gemäß dem Schnitt II-II,

FIG. 3 eine Seitenansicht der Vakuumrohrverbindung nach FIG. 1 in Pfeilrichtung III,

FIG. 4 eine Vorderansicht der Vakuumrohrverbindung nach FIG. 1 in Pfeilrichtung IV,

FIG. 5 eine Teildraufsicht auf eine Vakuumrohrverbindung mit einer anderen Ausführungsform im Schnellkupplungsbereich,

FIG. 6 eine Teildraufsicht auf eine Vakuumrohrverbindung einer weiteren Ausführungsform im Schnellkupplungsbereich,

FIG. 7 eine Draufsicht auf eine weitere erfindungsgemäße Vakuumrohrverbindung,

FIG. 8 eine Schnittansicht gemäß der Linie II-II der Vakuumrohrverbindung nach FIG. 7, jedoch in geschlossenem Kupplungszustand,

FIG. 9 eine vergrößerte Darstellung des erfindungsgemäßen Spannbolzens mit Führungsteil der FIG. 7 in einer Draufsicht,

FIG. 10 eine Vorderansicht des Spannbolzens der FIG. 9,

FIG. 11 eine Seitenansicht des Spannbolzens der FIG. 9,

FIG. 12 eine Längsansicht des Achszapfens der FIG. 7 in einer vergrößerten Darstellung und

FIG. 13 eine Draufsicht auf den Achszapfen der FIG. 12.

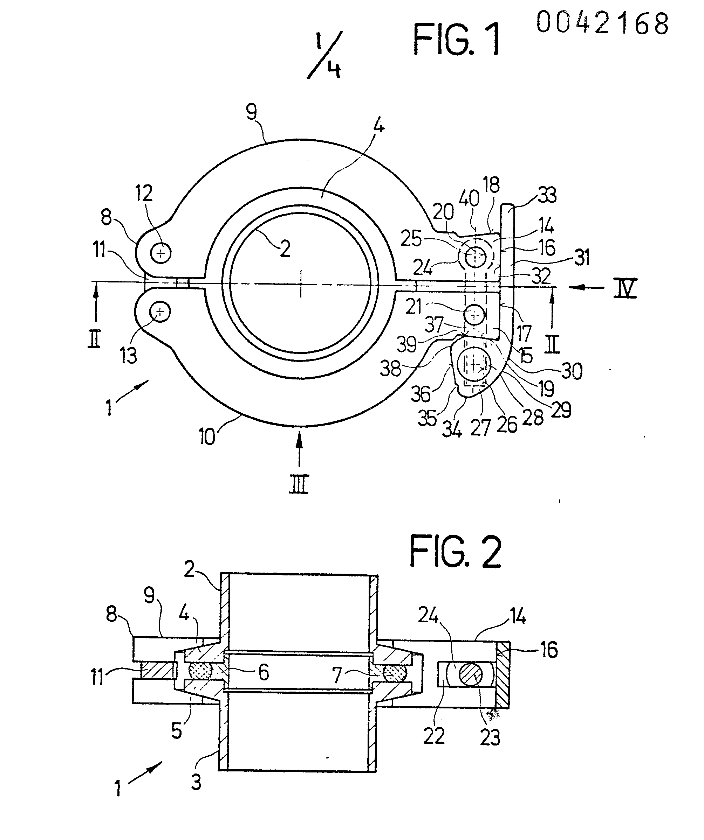

Die in den Figuren 1 bis 4 dargestellte Vakuumrohrverbindung 1 weist zwei Vakuumrohransätze 2,3 mit konischen Kleinflanschen 4,5 auf. Zwischen den Kleinflanschen 4,5 ist ein Zentrierring 6 mit einem äußeren gummielastischen Dichtungsring 7 angeordnet. Die Kleinflansche 4,5 werden von einem Spannring 8 umgriffen und gegeneinander gepreßt. Der Spannring 8 weist zwei Ringhälften 9,10 auf, die am hinteren Bereich über ein Scharnierteil 11, das in einer Schlitzausnehmung gelagert ist, an Zapfen 12,13 schwenkbar miteinander verbunden sind. Am vorderen Bereich weist die Ringhälfte 9 einen Endteil 14 und die Ringhälfte 10 ein Endstück 15 auf. Der Endteil 14 besitzt eine vordere Stirnfläche 16, die mit einer Stirnfläche 17 des Endstücks in einer Ebene verläuft. Der Endteil 14 besitzt zudem eine an die Stirnfläche 16 angrenzende Außenfläche 18 und das Endstück 15 besitzt eine Druckfläche 19, die an die Stirnfläche 17 angrenzt. Die FIG. 1 zeigt, daß der Winkel zwischen der Druckfläche 19 und der Stirnfläche 17 etwas kleiner als 90° ist. Ebenso ist der Winkel zwischen der Außenfläche 18 und der Strinfläche 16 etwas kleiner als 90°. Die Druckfläche 19 und die Außenfläche 18 verlaufen somit in Richtung zur Mitte der Vakuumrohrverbindung 1 leicht schräg. Zudem besitzen der Endteil 14 und das Endstück 15 ein Loch 20,21. Der Endteil 14 und das Endstück 15, die wie auch die beiden Ringhälften 9,10 gleich ausgebildet sind, weisen außerdem eine Aussparung 22 auf. In dieser Aussparung 22 befindet sich ein Spannbolzen 23, der mit einem Lagerauge 24 an einem Achszapfen 25 am Endteil 14 schwenkbar gelagert ist. Der Spannbolzen 23 erstreckt sich parallel zu den Stirnflächen 16,17 und besitzt einen Gewindeteil 26, der die Druckfläche 19 überragt und in ein Innengewinde 27 eines Achsbolzens 28 eingeschraubt ist. Der Achsbolzen 28, der im Durchmesser größer ist als der Spannbolzen 23, ist in einem Spannkopf 29 eines Spannstücks 30 schwenkbar gelagert.

Das Spannstück 30 besitzt einen Betätigungshebel 31, der sich an den Spannkopf 29 anschließt und sich parallel zum Spannbolzen 23 in Richtung zum Endteil 14 erstreckt. Dabei liegt der Betätigungshebel 31 mit seiner Innenfläche 32 an den Stirnflächen 16,17 des Endteils 14 und des Endstücks 15 plan an. Der Betätigungshebel 31 ist länger als die Gesamtbreite des Endteils 14 und des Endstücks 15 und überragt mit einem Griffansatz 33 die Außenfläche 18 des Endteils 14. Der Griffansatz 33 erlaubt einen einwandfreien Zugriff am Betätigungshebel 31 zur leichten und schnellen Spannkupplungsdurchführung. Die Stärke des Betätigungshebels ist etwas geringer als der Durchmesser des Spannbolzens 23, wodurch bei hoher Festigkeit eine materialsparende, schlanke und ästhetisch ansprechende Ausführung gegeben ist. Den Figuren 2,3 und 4 ist zu entnehmen, daß das Spannstück 30 mit dem Betätigungshebel 31 und dem Spannkopf 29 genauso breit wie die Dicke des Endteils 14 sowie des Endstücks 15 ist. Dadurch wird ein bündiger und ästhetisch gefälliger Abschluß im Vorderbereich des Spannrings 8 erzielt.

Der Spannkopf 29 des Spannstücks 30 ist in der Draufsicht etwa dreickförmig gestaltet und besitzt einen Rundteil 34, der in dem Griffansatz 33 abgewandter Richtung verjüngt ausläuft. Direkt neben dem Rundteil 34 ist ein als Rillenausnehmung ausgebildeter Rastteil 35 an einer Auflauffläche 36 angeordnet. Die Auflauffläche 36 des Spannkopfs 29 verläuft annähernd parallel in entgegengesetzter Richtung zum Betätigungshebel 31, jedoch quer zu einer Preßfläche 37 des Spannkopfes 29, wobei der Winkel zwischen der Auflauffläche 36 und der Preßfläche 37 etwas kleiner als 90° ist. Am Übergang zwischen der Preßfläche 37 und der Auflauffläche 36 ist eine Rundung 38 ausgebildet. Die Preßfläche 37 ist wie die Druckfläche 19 plan ausgeführt und verläuft ebenfalls schräg in Richtung zur Mitte der Vakuumrohrverbindung 1, so daß der Winkel zwischen der Preßfläche 37 und der Innenfläche 32 des Betätigungshebels 31 etwas kleiner als 90° ist. An dem der Innenfläche 32 entfernt liegenden Ende der Preßfläche 37 besitzt der Spannkopf 29 einen Druckpunkt 39. Dieser Druckpunkt 39 ist von der Innenfläche 32 weiter entfernt als der Abstand der Längsachse 40 des Spannbolzens 23 von der Innenfläche 32 ist und befindet sich im Bereich der dem Betätigungshebel 31 abgewandten Umfangsseite des Spannbolzens 23. Über den Druckpunkt 39 wird ohne zusätzliche Teile eine sichere Arretierung des Spannstücks 30 erzielt, wobei der Betätigungshebel 31 fest gegen den Endteil 14 und das Endstück 15 gepreßt wird. Außerdem wird durch den Schrägverlauf der Druckfläche 19 und der Preßfläche 37 eine Sicherung gegen ein Abschieben des Spannkopfes 29 vom Endstück 15 erreicht. Es ist dadurch auf einfache Art und Weise eine sichere Lagearretierung des Spannstücks 30 gegen ein unbeabsichtigtes Lösen gegeben. Durch den schrägen Verlauf der Druckfläche 19 wird zudem eine Bedienungserleichterung beim Spannverschließen erzielt, wobei der Spannkopf 29 über die Rundung 38 leichtgängig zur festen Anlage der Preßfläche 37 gegen die Druckfläche 19 schwenkbar ist.

Die Vakuumrohrverbindung 41 des in der FIG. 5 dargestellten Ausführungsbeispiels ist im wesentlichen wie die Vakuumrohrverbindung 1 des vorbeschriebenen Ausführungsbeispiels ausgeführt. Unterschiede bestehen darin, daß der Endteil 42 an seiner Außenfläche 43 eine überragende Nase aufweist. Das wie der Endteil 42 ausgeführte Endstück 45 besitzt an seiner Druckfläche 46 eine überragende Sperrnase 47. Diese Sperrnase 47, die wie die Nase 44 rechteckförmig ausgebildet ist, greift an der Preßfläche 48 in eine rechteckförmige Nasenausnehmung 49 des Spannkopfes 50 ein. Die Sperrnase 47 grenzt direkt an die Stirnfläche 17 des Endstücks 45 an, während die Nasenausnehmung 49 sich unmittelbar an der Innenfläche 32 des Betätigungshebels 31 des Spannstücks 51 anschließt.

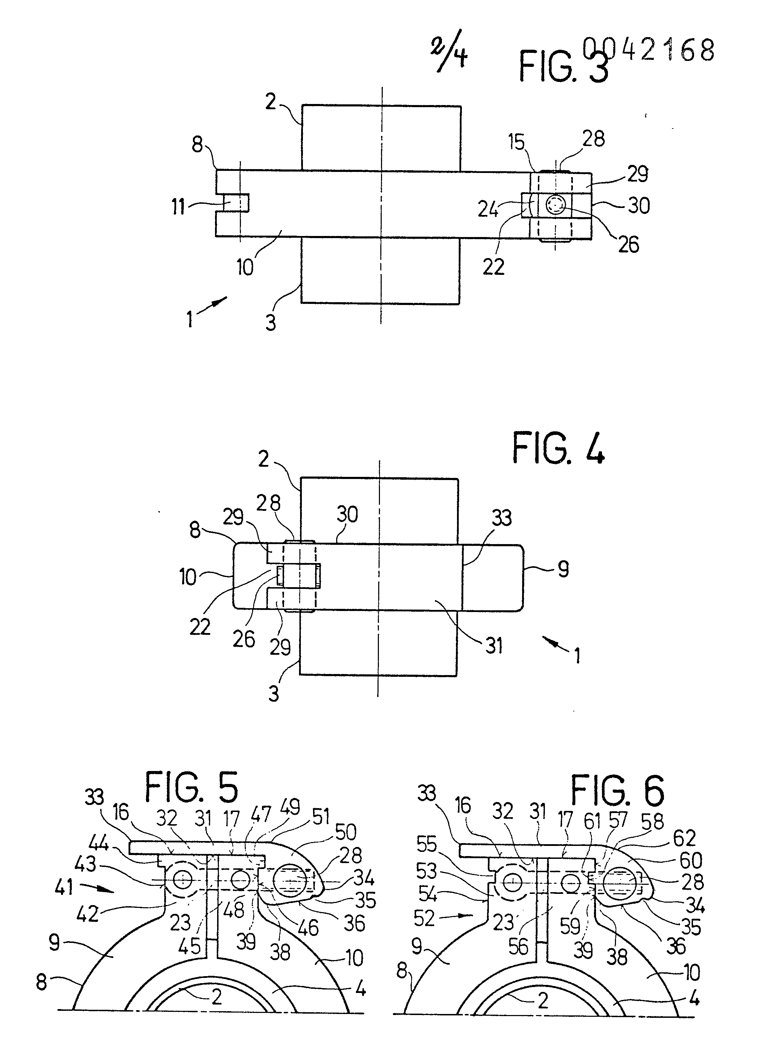

Bei dem in der FIG. 6 dargestellten Ausführungsbeispiel ist die Vakuumrohrverbindung 52 ebenfalls im wesentlichen gleich ausgeführt wie die Vakuumrohrverbindung 1 des in den Figuren 1 bis 4 dargestellten Ausführungsbeispiels. Unterschiede sind dadurch gegeben, daß der Endteil 53 an seiner Außenfläche 54 eine Ausnehmung 55 aufweist, die rechteckförmig ausgeführt ist und in einem Abstand zur Stirnfläche 16 angeordnet ist. Das gleich ausgebildete Endstück 56 besitzt an seiner Druckfläche 57 eine rechteckförmige Rastausnehmung 58, die in einem Abstand zur Stirnfläche 17 angeordnet ist. In die Rastausnehmung 58 greift ein an der Preßfläche 59 des Spannkopfes 60 vorstehender Rastnocken 61 ein. Der Rastnocken 61 befindet sich auf Abstand zur Innenfläche 32 des Betätigungshebels 31 des Spannstücks 62 und ist mit der Rastausnehmung 58 im Bereich des Spannbolzens 23 angeordnet.

Beim Lösen der Schnellkupplung wird der Betätigungshebel 31 über den Griffansatz 33 von den Stirnflächen 16,17 etwa um 90° abgeschwenkt und dann nach vorn abgezogen, so daß die Ringhälften 9,10 des Spannrings 8 von den Kleinflanschen 4,5 abgenommen werden können. Beim Ankuppeln wird entgegengesetzt verfahren. Nach dem Aufsetzen der Ringhälften 9,10 auf die Kleinflansche 4,5 wird das aufgeschwenkte Spannstück 30,51,62 mit seinem Spannkopf 29,50,60 über das Endstück 15,45,56 geschoben. Zur Erleichterung des Aufschiebens kann dabei zunächst der Spannkopf 29,50,60 mit seinem Rastteil 35 an der vorderen Ecke des Endstücks 15, 45,56 angesetzt werden. Durch ein entsprechend kurzes Weiterschwenken des Betätigungshebels 31 gleitet dann der Spannkopf 29,50,60 mit geringer Kraft leichtgängig über seine Auflauffläche 36 nach hinten. Sodann wird der Betätigungshebel 31 in Richtung gegen die Stirnflächen 16, 17 verschwenkt, wobei der Spannkopf 29,50,60 mit seiner Rundung 38 an der Druckfläche 19,46,57 abrollt und dabei mit leichtem Druck ebenfalls nach hinten gleitet. Beim erreichen der Endspannstellung ist das Spannstück 30 über den Druckpunkt 39 und den Schrägverlauf der Druckfläche 19 und der Preßfläche 37 sicher arretiert. Beim Ausführungs-

0042168

beispiel der FIG. 5 erfolgt eine zusätzliche Arretierungssicherung des Spannstücks 51 über die Sperrnase 47, die in die Nasenausnehmung 49 eingreift. Beim Ausführungsbeispiel der FIG. 6 erfolgt eine zusätzliche Arretierungssicherung des Spannstücks 62 durch den Eingriff des Rastnockens 61 in die Rastausnehmung 58 des Endstücks 56. Über den in den Achsbolzen 28 eingedrehten Gewindeteil 26 kann das Spannstück 30,51,62 entsprechend den Montageerfordernissen eingestellt werden. Wie insbesondere die Figuren 1,5 und 6 erkennen lassen, ist es auch ohne weiteres möglich, das Spannstück 30,51,62 und den Spannbolzen 22 genau anders herum zu motieren, so daß eine wahlweise Anbringung bei der Herstellung möglich ist. Auch ist für die Herstellung der Ringhälften 9,10 des Spannrings 8 nur ein einziges Formwerkzeug erforderlich, da beide Ringhälften 9,10 mit dem jeweiligen Endteil 14,42,53 bzw. Endstück 15, 45,56 völlig gleich ausgebildet sind. Das Spannstück 30, 51,62 kann auch bei verschieden großen Spannringen angebracht werden, ohne daß dazu irgendwelche Änderungen erforderlich wären, so daß eine ausgesprochen vielseitige und kostengünstige Herstellung möglich ist. Es ist klar, daß die Erfindung nicht auf die vorliegenden Ausführungsbeispiele beschränkt ist, sondern der erfindungsgemäße Schnellverschluß kann z.B. ebenso an einer sogenannten Spannkette oder einem Mehrgliederspannring für Vakuumrohrverbindungen mit Kleinflanschen ohne weiteres eingesetzt werden.

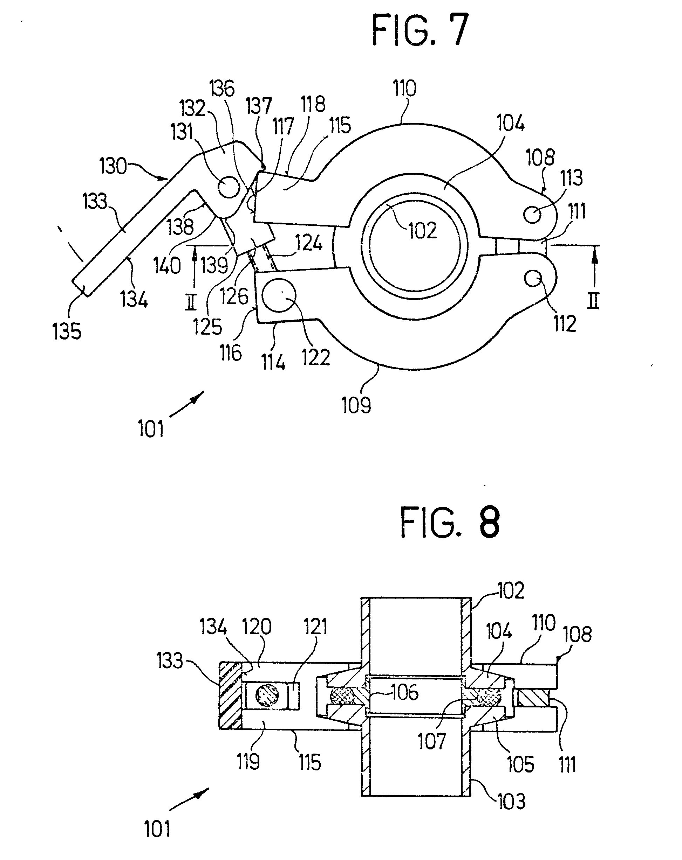

Die in den Figuren 7 und 8 dargestellte Vakuumrohrverbindung 101 weist zwei Rohransätze 102,103 mit konischen Kleinflanschen 104,105 auf. Zwischen den Kleinflanschen 104,105 befindet sich ein Zentrierring 106 mit einem äußeren gummielastischen Dichtungsring 107. Die Kleinflansche 104,105 werden von einem Spannring 108 umgriffen und unter Verformung des Dichtungsringes 107 gegeneinander gepreßt. Der Spannring 108 weist zwei im wesentlichen gleiche ringhälftenförmige Spannringstücke 109,110 auf, die am hinteren Bereich über einen in einer Schlitzausnehmung gelagerten Scharnierteil 111 und Zapfen 112,113 schwenkbar miteinander verbunden sind. Das Spannringstück 109 besitzt am vorderen Bereich einen Endteil 114 und am Spannringstück 110 ist ein Endstück 115 ausgebildet. Im Kupplungszustand liegen die Stirnflächen 116 ,117 des Endteils 114 sowie des Endstücks 115 im wesentlichen in einer Ebene. Das Endstück 115 besitzt außen eine Druckfläche 118, die an die Stirnfläche 117 angrenzt und derart schräg verläuft, daß der Winkel zwischen der Stirnfläche 117 und der Druckfläche 118 etwas kleiner als 90° ist und beim vorliegenden Ausführungsbeispiel etwa 84° beträgt. Der Endteil 114 und das Endstück 115 besitzen zudem zwischen zwei Plattenteilen 119,120 je eine schlitzförmige Aussparung 121 und im Endteil 114 ist außerdem ein Achszapfen 122 schwenkbar gelagert.

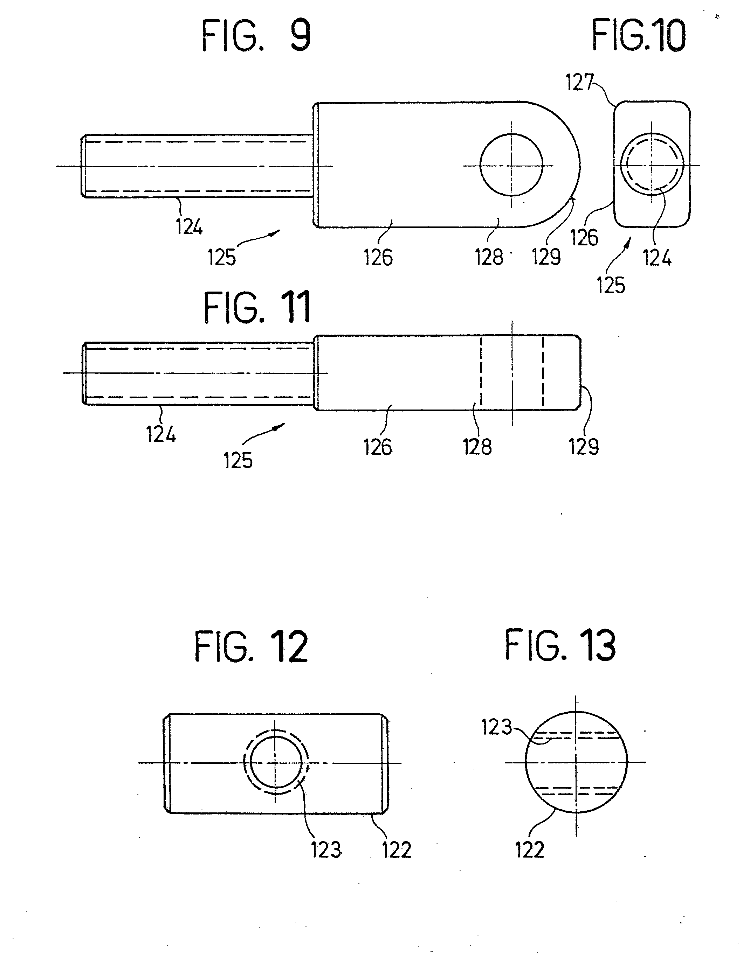

Der in den Figuren 12 und 13 vergrößert dargestellte Achszapfen 122 besitzt in seiner Längsmitte ein quer zur Zapfenachse verlaufendes Innengewinde 123, in dem ein Gewindeteil 124 eines Spannbolzens 125 drehverstellbar gelagert ist. Der Spannbolzen 125 weist außerdem einen Führungsteil 126 auf, der beim vorliegenden Ausführungsbeispiel einen flachrechteckförmigen Querschnitt besitzt. Die Stärke des Führungsteils 126 ist so bemessen, daß sie nur geringfügig kleiner ist als die Breite der Aussparung 121 des Endstücks 115. Insbesondere der FIG. 10 ist zu entnehmen, daß die Kantenbereiche des rechteckförmigen Führungsteils 126 gerundet sind, so daß zentrierfördernde Einführfasen 127 gebildet sind. Der in die Aussparung 121 eingreifende Führungsteil 126 ist in seiner Länge so bemessen, daß letzterer im Kupplungszustand in Spannrichtung gesehen ungefähr gleich der Breite des Endstücks 115 ist. Der Gewindeteil 124 schließt sich in Längsrichtung des Spannbolzens 125 unmittelbar an den Führungsteil 126 an, so daß zur einfachen Herstellung eine direkte Verlängerung zum Achszapfen 122 gegeben ist. Anderenends weist der Spannbolzen 125 einen mit einem Loch versehenen, als Lagerauge ausgebildeten Fortsatz 128 auf. Der Fortsatz 128 besitzt den gleichen Querschnitt wie der Führungsteil 126 und hat am Ende eine halbkreisförmige Abrundung 129. Am Fortsatz 128 des Führungsteils 126 ist ein Spannstück 130 über einen Achsbolzen 131 schwenkbar gelagert. Dabei befindet sich der Fortsatz 128 im Spannkopf 132 des Spannstücks 130 in einer Schlitzaussparung, die in ihrer Breite etwa gleich der Aussparung 121 ausgeführt ist. Das Spannstück 130 besitzt einen sich an den Spannkopf 132 anschließenden Betätigungshebel 133 und besteht in bevorzugter Ausführung insgesamt aus Kunststoff, vorzugsweise Polyamid 6.6 oder Polyformaldehyd, das aufgrund seiner zähelastischen Eigenschaften, guten Gleitfähigkeit, hohen Abriebfestigkeit und hochwertigen Standfestigkeit für die vorliegende Schnellkupplungsvorrichtung besonders geeignet sein kann. Dabei kann es zur Erzielung einer sehr leichten Ausführungsform und zur Kosteneinsparung auch zweckmäßig sein, sowohl das Endstück 115 und den Endteil 114 als auch die Spannringstücke 109,110 wie das Spannstück 130 aus im wesentlichen gleichem Kunststoff auszuführen.

Im Kupplungszustand liegt der Betätigungshebel 133 mit seiner Innenfläche an den Stirnflächen 116,117 plan an. Dabei überragt ein Griffansatz 135 des Betätigungshebels 133 den Endteil 114, so daß zur leichten und schnellen Handhabung beim Kupplungsvorgang ein einwandfreier Zugriff gegeben ist. Die Stärke des Betätigungshebels 133 entspricht etwa dem Durchmesser des Gewindeteils 124. Die FIG. 8 macht deutlich, daß das Spannstück 130 genauso breit ist wie die Dicke des Endteils 114 und des Endstücks 115, wodurch ein bündiger Abschluß im Vorderbereich des Spannrings 108 gegeben ist.

Der Spannkopf 132 besitzt am Ende seiner Auflauffläche 136 einen Rastteil 137. Die Auflauffläche 136 verläuft quer zu einer Preßfläche 138 des Spannkopfes 132, wobei der Winkel zwischen der Auflauffläche 136 und der Preßfläche 138 als Spitzwinkel ausgeführt ist und etwa 70° beträgt. Am Übergang zwischen der Auflauffläche 136 und der Preßfläche 138 ist eine Rundung 139 ausgebildet. Die Preßfläche 138 ist wie die Druckfläche 118 plan ausgebildet und verläuft ebenfalls schräg, so daß der Winkel zwischen der Preßfläche 138 und der Innenfläche 134 des Betätigungshebels 133 kleiner als $90^{\circ}$ ist und etwa ebenfalls $84^{\circ}$ beträgt. Am Ende der Preßfläche 138 und Anfang der Rundung 139 besitzt der Spannkopf 132 einen Druckpunkt 140. Dadurch wird ohne zusätzliche Teile eine sichere Arretierung des Spannstücks 130 im Kupplungszustand erzielt. Weiterhin ist durch den Schrägverlauf der Druckfläche 118 und der Preßfläche 138 eine Abschiebesicherung gegeben, wodurch ein unbeabsichtigtes Lösen des Spannkopfes 132 vom Endstück 115 verhindert ist. Durch den Schrägverlauf der Druckfläche 118 wird außerdem eine Bedienungserleichterung beim Spannanzug erreicht, wobei der Spannkopf 132 mit seiner Auflauffläche 136 praktisch selbsttätig und leichtgängig an der Druckfläche 118 entlang auf das Endstück 115 gleitet.

Beim Ankuppeln wird das Spannstück 130 in die in der FIG. 7 dargestellte Position gebracht, wobei der Führungsteil 126 in die Aussparung 121 des Endstücks 115 gelangt. Dadurch ist eine Zwangszentrierung bzw. Zwangsausrichtung des Spannstücks 130 gegeben, die ein Schiefansetzen bzw. eine Fehlbedienung ausschließen, selbst wenn die durch die Bedienungsperson eingeleiteten Spannkräfte schräg angreifen. Der Rastteil 137 hintergreift den Eckbereich des Endstücks 115. Beim Verschwenken des Betätigungshebels 133 in Pfeilrichtung werden das Endstück 115 und der Endteil 114 zusammengedrückt, so daß die beiden Spannringstücke 109,110 ebenfalls zusammengedrückt werden. Es ist dadurch ein leichtgängiger Spannvoranzug gegeben, der aufgrund der Hebelwirkung bereits mit geringer Kraft durchgeführt werden kann. Nachdem der Betätigungshebel 133 so weit in Pfeilrichtung verschwenkt worden ist, daß die Auflauffläche 136 etwa in der Ebene der Druckfläche 118 ist, gleitet der Spannkopf 132 leichtgängig und praktisch selbsttätig entlang der Druckfläche 118 hinter das Endstück 115. Dabei ist die Zwangs-führung über den Führungsteil 126 stets voll

0042168

wirksam. Danach wird der Betätigungshebel 133 zurückgeschwenkt, so daß die Innenfläche 134 an den Stirnflächen
116,117 des Endstücks 115 und des Endteils 114 zur Anlage
gelangt. Dabei rollt der Spannkopf 132 mit seiner Rundung
139 an der Druckfläche 118 ab. Nach dem Erreichen der
Endstellung ist das Spannstück 130 über den Druckpunkt
140 sowie durch den Schrägverlauf der Druckfläche 118 und
der Preßfläche 138 fest arretiert. Auch in dieser Endspannstellung wird durch den Führungsteil 126 eine zuverlässige Sicherung gegen Verdrehen des Spannstücks 130 erreicht. Über den in den Achszapfen 122 eingedrehten Gewindeteil 124 kann das Spannstück 130 entsprechend den
jeweiligen Erfordernissen feinstufig angepaßt werden. Zudem
kann das Spannstück 130 auch bei verschieden großen Spannringen problemlos eingesetzt werden, ohne daß irgendwelche
Änderungen erforderlich sind, wodurch eine vielseitige
Verwendungsmöglichkeit gegeben ist und eine Kosteneinsparung erzielt wird. Die Erfindung mit der Verdrehsicherung
ist nicht nur auf das vorliegende Ausführungsbeispiel beschränkt, sondern kann auch vorteilhaft bei anderen Spannringausführungsformen eingesetzt werden.

Friedrich Linnemann, D-7405 Dettenhausen, Uhlandstr. 24

Patentansprüche
===============

1. Spannring (8) zur Schnellkupplung zweier Kleinflansche(4,5,104,105) einer Rohrverbindung, insbesondere einer Vakuumrohrverbindung (1,101), mit einem Endteil (14,42,52,114) , an dem über einen Achszapfen (25,122) ein Spannbolzen (23,125) schwenkbar gelagert ist, und mit einem Endstück (15,45,56,115), das im Kupplungszustand über ein Spannstück (30,51,62,130), das einen Betätigungshebel (31,131) sowie einen Spannkopf (29,50,60 132) aufweist, der über einen Achsbolzen (28,131) am Spannbolzen (23,125) schwenkbar angeordnet ist, in Richtung gegen den Endteil (14,42,53,114) gepreßt wird, wobei der Spannbolzen (23,125) im wesentlichen parallel zu Stirnflächen (16,17,116,117) des Endteils (14,42,53,114) und des Endstücks (15,45,56,115) verläuft und der Spannkopf (29,50,60,132) mit einer Preßfläche (37,48,59,13?) am Endstück (15,45,56,115) an einer Druckfläche (19,46, 57,118) anliegt, dadurch gekennzeichnet, daß der Betätigungshebel (31,131) des Spannstücks (30,51,62,130) zur Preßfläche (37,48,59,138) des Spannkopfes (29,50,60,132) sowie zur Druckfläche (19,46,57,118) des Endstücks (15, 45,56,115) quer verläuft und ausgehend vom Spannkopf (29, 50,60,132) sich vor der Stirnfläche (16,17,116)im wesentlichen parallel zum Spannbolzen (23,125) in Richtung zum Endteil (14,42,53,114) erstreckt.

2. Spannring nach Anspruch 1, dadurch gekennzeichnet, daß die Länge des Betätigungshebels (31,131) etwas größer ist als die Breite des Endteils (14,42,53,114) zuzüglich der Breite des Endstücks (15,45,56,115) in Spannrichtung des Spannbolzens (23,125) und der freie Endbereich des Betätigungshebels (31,131) ein eine Außenfläche (18,43,54) des Endteils (14,42,53,114) überragender Griffansatz (33,135) ist.

3. Spannring nach einem der vorstehenden Ansprüche, dadurch gekennzeichnet, daß die Breite des Betätigungshebels (31,131) im wesentlichen gleich der Dicke des Endteils (14,42,53,114) sowie des Endstücks (15,45,56,115) ist.

4. Spannring insbesondere nach einem der vorstehenden Ansprüche, dadurch gekennzeichnet, daß der Spannkopf (29, 50,60,132) des Spannstücks (30,51,62,130) eine Sicherung gegen Abschieben vom Endstück (15,45,56,115) aufweist.

5. Spannring insbesondere nach einem der vorstehenden Ansprüche, dadurch gekennzeichnet, daß der Spannkopf (29, 50,60,132) an der Druckfläche (19,46,57,118) des Endstücks (15,45,56,115) mit einem dem Betätigungshebel (31,131) entfernt liegenden Druckpunkt (39,140) anliegt, dessen Abstand zur Innenfläche (32,134) des Betätigungshebels (31, 131) größer ist als der Abstand zwischen der Längsachse (40) des Spannbolzens (23,125) und der Innenfläche (32,134).

6. Spannring nach einem der vorstehenden Ansprüche, dadurch gekennzeichnet, daß der Spannkopf (29,50,60,132) eine Auflauffläche (36,136) aufweist, die quer zur Preßfläche (37,48,59,138) verläuft.

7. Spannring nach einem der vorstehenden Ansprüche, dadurch gekennzeichnet, daß der Spannkopf (29,50,60,132) an der Auflauffläche (36,136) einen Rastteil (35,137) aufweist.

8. Spannring nach einem der vorstehenden Ansprüche, dadurch gekennzeichnet, daß das Spannstück (30,51,62,130) mit seinem Spannkopf (29,50,60,132) über den Spannbolzen (23,125) in Richtung zum Griffansatz (33,135) verstellbar ist.

9. Spannring insbesondere nach einem der vorstehenden Ansprüche, dadurch gekennzeichnet, daß zwischen der Preßfläche (37,48,59,138) des Spannkopfes (29,50,60,132) und
der Innenfläche (32,134) des Betätigungshebels (31,131)
ein spitzer Winkel besteht und die Preßfläche (37,48,59,
138) schräg verläuft und daß die Druckfläche (19,46,57,
118) des Endstücks (15,45,56,115) in gleichem Maße schräg
verläuft, wobei der Winkel zwischen der Druckfläche (19,46,
57,118) und der Stirnfläche (17,117) ebenfalls spitz ist.

10. Spannring insbesondere nach einem der vorstehenden
Ansprüche, dadurch gekennzeichnet, daß dem Spannstück (130)
zur Ausrichtung und Sicherung gegen Verdrehen um die Längsachse des Spannbolzens (125) ein Führungsteil (126) zugeordnet ist.

11. Spannring nach einem der vorstehenden Ansprüche, dadurch gekennzeichnet, daß der Führungsteil (126) am Spannbolzen angeordnet und in eine Aussparung (121) des Endstücks
(115) bzw. des Endteils (114) einschwenkbar ist.

12. Spannring nach einem der vorstehenden Ansprüche, dadurch gekennzeichnet, daß das Spannstück an einem Fortsatz (128) des Führungsteils (126) schwenkbar gelagert ist.

13. Spannring nach einem der vorstehenden Ansprüche, dadurch gekennzeichnet, daß ein im Achszapfen (122) des Endteils (114) verdrehbar gelagerter Gewindeteil (124) des
Spannbolzens (125) in Verlängerung des Führungsteils (126)
ausgebildet ist.

14. Spannring insbesondere nach einem der vorstehenden
Ansprüche, dadurch gekennzeichnet, daß das am Spannbolzen
(125) gelagerte Spannstück (130) aus Kunststoff gebildet
ist.

15. Spannring nach einem der vorstehenden Ansprüche, dadurch
gekennzeichnet, daß das den Führungsteil (126) zentrierende
Endstück (115) und der Endteil (114) sowie das Spannringstück (109,110) und das Spannstück (130) aus im wesentlichen gleichem Kunststoff gebildet sind.

$\frac{1}{4}$   FIG. 1   0042168

FIG. 2

LINNEMANN

FIG. 3 2/4 0042168

FIG. 4

FIG. 5

FIG. 6

LINNEMANN

# FIG. 7

# FIG. 8

FIG. 9

FIG.10

FIG. 11

FIG. 12

FIG. 13

LINNEMANN

**Europäisches Patentamt**

# EUROPÄISCHER RECHERCHENBERICHT

0042168

Nummer der Anmeldung

EP 81104612.7

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A1 - 2 549 387 (CONSTRUCTION FORMS INC.) | 1,6,8, 10 |
| | + Gesamt + | |
| | -- | |
| | DE - A - 2 263 397 (CONSTRUCTION FORMS INC.) | 1,6,8, 10 |
| | + Gesamt + | |
| | -- | |
| | US - A - 3 828 403 (PERRIN) | 1,3,6 |
| | + Gesamt + | |
| | -- | |
| | DE - B - 1 186 284 (AKTIEBOLAGET ALVENIUS INDUSTRIER) | 1,6 |
| | + Gesamt + | |
| | -- | |
| | DE - B - 1 194 658 (MASCHINEN- FABRIK KARL BRIEDEN & CO) | 1 |
| | + Gesamt + | |
| | -- | |
| | DE - A1 - 2 845 167 (FMC EUROPE S.A.) | 1 |
| | + Gesamt + | |
| | -- | |
| | DE - A1 - 2 611 175 (WEINHOLD KARL) | 1,6 |
| | + Gesamt + | |
| | ---- | |

**KLASSIFIKATION DER ANMELDUNG (Int. Cl.)**

F 16 L 37/20
F 16 L 23/04
F 16 L 33/12

**RECHERCHIERTE SACHGEBIETE (Int. Cl.)**

F 16 L 17/00
F 16 L 19/00
F 16 L 23/00
F 16 L 33/00
F 16 L 37/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugr. de liegende Theorien oder Grundsatze
E: kollidierende Anmeldung
D: in der Anmeldung angeführtes Dokument
L: aus andern Gründen angeführtes Dokument
&: Mitglied der gleichen Patent- familie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 19-08-1981 | SCHUGANICH |

EPA form 1503.1  06.78